# EUROPÄISCHE PATENTSCHRIFT

(11) **EP 2 229 654 B1**
(45) Veröffentlichungstag und Bekanntmachung des Hinweises auf die Patenterteilung: **06.07.2011**
(21) Anmeldenummer: 08870390.5
(22) Anmeldetag: 15.12.2008
(51) Int. Cl.: G06K 19/073, G06K 19/077, G07D 7/02, G07D 7/00, G07F 7/02

(54) **DOKUMENT MIT EINER ANZEIGEVORRICHTUNG UND VERFAHREN ZUR WAHL EINER GEHEIMEN KENNUNG**
DOCUMENT HAVING A DISPLAY APPARATUS AND METHOD FOR SELECTING A SECRET IDENTIFICATION
DOCUMENT DOTÉ D'UN DISPOSITIF D'AFFICHAGE ET PROCÉDÉ DE SÉLECTION D'UN IDENTIFIANT SECRET

(30) Priorität: 08.01.2008 DE 102008000011
(43) Veröffentlichungstag der Anmeldung: 22.09.2010
(73) Patentinhaber: Bundesdruckerei GmbH, 10958 Berlin (DE)
(72) Erfinder: BYSZIO, FRANK, 16348 Wandlitz (DE); SCHOLZE, STEFFEN, 10249 Berlin (DE)
(74) Vertreter: Richardt Patentanwälte
(86) Internationale Anmeldenummer: PCT/EP2008/067498
(87) Internationale Veröffentlichungsnummer: WO 2009/087018

(56) Entgegenhaltungen:
- DE-A1- 19 850 307
- DE-A1- 19 921 524
- DE-U1- 20 204 929
- US-A- 5 907 142
- US-A1- 2005 211 767

## Beschreibung

Die vorliegende Erfindung betrifft ein Dokument mit einer integrierten Anzeigevorrichtung, insbesondere ein Wert- oder Sicherheitsdokument, sowie ein Verfahren zur Wahl einer geheimen Kennung.

Dokumente mit einer integrierten elektronischen Schaltung sind aus dem Stand der Technik an sich in verschiedener Form bekannt. Beispielsweise gibt es Wert- und Sicherheitsdokumente in überwiegend papierbasierter Form, wie zum Beispiel als Banknote, als elektronischen Reisepass, oder als kunststoffbasierte Chipkarte, insbesondere als sogenannte Smart Card, in kontaktbehafteter, kontaktloser oder Dual-Interface Ausführung.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem kontaktlosen, beispielsweise einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Des Weiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117 bekannt ist.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 7816, ISO 14443, ISO 15763 festgelegt.

Für die Freischaltung einer Chipkarten-Funktion kann eine zuvorige Benutzeridentifizierung gegenüber der Chipkarte erforderlich sein, wie es aus dem Stand der Technik an sich bekannt ist. Die häufigste Benutzeridentifizierung ist die Eingabe einer geheimen Kennung, welche im Allgemeinen als PIN (Personal Identification Number) oder als CHV (Card Holder Verification) bezeichnet wird. Solche Kennungen bestehen im Allgemeinen aus einer numerischen oder alphanumerischen Zeichenkette. Zur Benutzeridentifizierung wird die Kennung von dem Benutzer auf der Tastatur eines Chipkarten-Terminals oder eines Computers, an den ein Chipkarten-Leser angeschlossen ist, eingegeben, und dann zu der Chipkarte gesendet. Diese vergleicht die eingegebene Kennung mit der gespeicherten Kennung und teilt dann das Ergebnis dem Terminal bzw. dem Computer durch Ausgabe eines entsprechenden Signals mit.

Nach der zum Anmeldezeitpunkt unveröffentlichten DE 10 2007 008 651 derselben Anmelderin wird eine Chipkarte geschaffen, in der zumindest zwei geheime Kennungen, beispielsweise zwei PINs, zum Schutz derselben Chipkarten-Funktion gespeichert sind. Dem berechtigten Benutzer der Chipkarte wird von dem Herausgeber der Chipkarte zunächst nur eine der Kennungen mitgeteilt. Wenn der Benutzer diese Kennung vergisst, so kann er eine Anforderung an den Herausgeber der Chipkarte richten, um von dort die zweite auf seiner Chipkarte gespeicherte Kennung zu erhalten.

Aus der DE 199 215 24 A1 ist eine Prozessor-Chipkarte mit einer Schnittstelle zu einem Mobilfunktelefon bekannt. Bei einem Ersteinsatz der Prozessor-Chipkarte wird ein Anzeigesignal für die Erstbenutzung von der Prozessor-Chipkarte ausgegeben und auf der Anzeige des Mobilfunkgeräts angezeigt.

Aus US 2005/0211767 A1 ist eine Chipkarte bekannt, auf der Bildinformationen gespeichert werden.

Der Erfindung liegt dem gegenüber die Aufgabe zu Grunde, ein verbessertes Dokument sowie ein verbessertes Verfahren zur Wahl einer geheimen Kennung für ein Dokument zu schaffen.

Die der Erfindung zu Grunde liegenden Aufgaben werden jeweils mit den Merkmalen der unabhängigen Patentansprüche 1 und 11 gelöst. Ausführungsformen der Erfindung sind in den abhängigen Patentansprüchen angegeben.

Nach Ausführungsformen der Erfindung wird ein Dokument mit einer Anzeigevorrichtung und mit einer elektronischen Schaltung geschaffen. Sowohl die Anzeigevorrichtung als auch die elektronische Schaltung sind in dem Dokumentenkörper des Dokuments integriert. Die elektronische Schaltung kann zwei verschiedene Zustände haben, nämlich entweder einen Erstbenutzungsstatus oder einen Benutzt-Status.

Wenn sich die Schaltung in dem Erstbenutzungsstatus befindet, so kann ein Benutzer der Schaltung sicher sein, dass keine zuvorige unautorisierte Benutzung der Schaltung insgesamt oder eine von deren Funktionen durch einen Dritten erfolgt ist. Befindet sich die Schaltung dagegen in ihrem Benutzt-Status, so bedeutet dies, dass zuvor bereits eine Benutzung der elektronischen Schaltung bzw. der Funktion erfolgt ist. Der Erstbenutzungsstatus kann sich also auf die Schaltung insgesamt oder auf eine oder mehrere von deren Funktionen beziehen. Bei den betreffenden Funktionen kann es sich um besonders sicherheitskritische Funktionen handeln, wie z.B. Signaturfunktionen oder Bezahlfunktionen.

Die Anzeigevorrichtung des Dokuments ist zur Anzeige eines Aktivierungscodes ausgebildet. Der Aktivierungscode kann von einem Benutzer in die elektronische Schaltung des Dokuments eingegeben werden. Nachdem ein Benutzer einen Code in die elektronische Schaltung eingegeben hat, überprüft diese, ob der Code mit dem Aktivierungscode übereinstimmt. Wenn dies der Fall ist, fordert die elektronische Schaltung die Eingabe einer vom Benutzer zu wählenden geheimen Kennung, das heißt beispielsweise einer sogenannten PIN, an. Nachdem der Benutzer diese geheime Kennung in die Schaltung eingegeben hat, erfolgt ein Übergang von dem Erstbenutzungsstatus in den Benutzt-Status. Nach Ausführungsformen der Erfindung ist dieser Übergang von dem Erstbenutzungsstatus in den Benutzt-Status irreversibel, kann also beispielsweise auch nicht durch Eingabe eines sog. Personal Unlocking Key (PUK) oder dergleichen rückgängig gemacht werden.

Ausführungsformen der vorliegenden Erfindung sind besonders vorteilhaft, da sie die Vergabe eines individuellen Aktivierungscodes ermöglichen, ohne dass die Versendung eines sogenannten PIN-Briefes erforderlich ist. Ein weiterer Vorteil ist die Nutzerfreundlichkeit, da ein Benutzer zur Inbenutzungnahme des Dokuments lediglich den auf der Anzeigevorrichtung des Dokuments angezeigten Aktivierungscode eingeben muss.

Nach einer Ausführungsform der Erfindung hat die elektronische Schaltung eine sogenannte Erstnutzerfunktion, die den automatischen Übergang von dem Erstbenutzungsstatus in den Benutzt-Status bewirkt, sobald ein zutreffender Aktivierungscode eingegeben und die geheime Kennung durch den Benutzer gewählt worden ist.

Unter "Erstnutzerfunktion" wird hier jede Funktion der Schaltung verstanden, die sicherstellt, dass die Schaltung insgesamt oder eine bestimmte Funktion der Schaltung, insbesondere eine bestimmte Chipkartenfunktion, vor Wahl der geheimen Kennung, wie zum Beispiel einer PIN, durch den autorisierten Benutzer des Dokuments zuvor nicht unbefugt benutzt worden ist.

Unter einem "Dokument" werden erfindungsgemäß unter anderem Papier basierte und/oder Kunststoff basierte Dokumente verstanden, wie zum Beispiel Ausweisdokumente, insbesondere Reisepässe, Personalausweise, Visa, Führerscheine, Fahrzeugscheine, Fahrzeugbriefe, Firmenausweise, Gesundheitskarten oder andere ID-Dokumente, sowie auch Chipkarten, Zahlungsmittel, insbesondere Bankkarten und Kreditkarten, Frachtbriefe oder sonstige Berechtigungsnachweise.

Nach einer Ausführungsform der Erfindung handelt es sich bei der in das Dokument integrierten Anzeigevorrichtung um ein Aktiv- oder Passiv-Matrixdisplay oder eine Segment-Anzeige.

Insbesondere kann es sich bei der Anzeigevorrichtung um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944), handeln.

Nach einer Ausführungsform der Erfindung ist die elektronische Schaltung zur Ansteuerung der Anzeigevorrichtung des Dokuments zur Anzeige des Aktivierungscodes ausgebildet. Hierzu kann die elektronische Schaltung eine Treiberschaltung für die Anzeigevorrichtung aufweisen. Alternativ kann die Treiberschaltung auch Teil der Anzeigevorrichtung sein oder als separate Schaltungskomponente ausgeführt sein.

Nach einer Ausführungsform der Erfindung hat das Dokument einen elektronischen Speicher zur Speicherung des Aktivierungscodes. Beispielsweise kann der Aktivierungscode anlässlich der Personalisierung des Dokuments generiert und in dem elektronischen Speicher des Dokuments gespeichert werden. Vorzugsweise wird der Aktivierungscode in einem geschützten Speicherbereich des elektronischen Speichers gespeichert, um Manipulationen zu unterbinden.

Nach einer Ausführungsform der Erfindung ist die elektronische Schaltung zur Generierung des Aktivierungscodes ausgebildet. Beispielsweise hat das Dokument einen elektronischen Speicher zur Speicherung von Personalisierungsdaten. Die Personalisierungsdaten können Angaben zu dem Dokument selbst beinhalten, wie zum Beispiel Gültigkeitsdauer, ausstellende Behörde, Dokumentennummer, etc. und/oder personenbezogene Angaben zu dem Träger des Dokuments, wie zum Beispiel Name, Adresse, Geburtsdatum, etc. Die elektronische Schaltung greift auf zumindest einen Teil dieser Personalisierungsdaten zu und generiert daraus nach einem vorgegebenen Algorithmus den Aktivierungscode, der dann auf der Anzeigevorrichtung angezeigt wird. Alternativ oder zusätzlich kann das Dokument einen Zufallsgenerator aufweisen. Eine von dem Zufallsgenerator gelieferte Zufallskennung kann alleine oder in Kombination mit den Personalisierungsdaten als Aktivierungscode verwendet werden.

Nach einer Ausführungsform der Erfindung hat die Anzeigevorrichtung bistabile Anzeigeelemente zur Anzeige des Aktivierungscodes. Unter einem bistabilen Anzeigeelement wird hier jedes Anzeigeelement verstanden, welches zumindest zwei verschiedene stabile Zustände einnehmen kann und in diesen Zuständen ohne Energiezufuhr verharrt. Je nach dem Zustand, welchen ein solches Anzeigeelement einnimmt, zeigt es einen entsprechenden Grau- oder Farbwert an. Ein bistabiles Anzeigeelement kann zum Beispiel als elektrophoretisches Anzeigeelement oder als Drehelement, insbesondere als so genanntes elektronisches Papier wie z.B. Gyricon, ausgebildet sein.

Die Ausbildung der Anzeigevorrichtung mit bistabilen Anzeigeelementen zur Anzeige des Aktivierungscodes ist besonders vorteilhaft, da ein Zugriff der elektronischen Schaltung auf einen Speicher des Dokuments, in dem der Aktivierungscodes gespeichert ist, für die Anzeige des Aktivierungscodes auf der Anzeigevorrichtung nicht erforderlich ist. Die Anzeigevorrichtung kann nämlich anlässlich der Personalisierung des Dokuments zur Anzeige des Aktivierungscodes angesteuert werden. Aufgrund der bistabilen Ausführung der Anzeigeelemente verharren diese in deren aufgrund der Anzeige des Aktivierungscodes eingenommenen Zuständen, so dass der Aktivierungscode permanent angezeigt wird, auch wenn die Anzeigevorrichtung und die elektronische Schaltung nicht mit elektronischer Energie versorgt werden. Nachdem der Übergang von dem Erstbenutzungsstatus in den Benutzt-Status erfolgt ist oder anlässlich eines solchen Übergangs, steuert die elektronische Schaltung die Anzeigevorrichtung so an, dass der Aktivierungscode nicht mehr angezeigt wird. Aufgrund dessen ist es für den Benutzer des Dokuments augenfällig, ob sich dieses in den Erstbenutzungsstatus oder in dem Benutzt-Status befindet. Befindet sich das Dokument in dem Benutzt-Status so wird der Aktivierungscode nämlich nicht mehr auf der Anzeigevorrichtung permanent angezeigt.

Nach einer Ausführungsform der Erfindung hat das Dokument einen elektronischen Speicher zur Speicherung von Bilddaten. Unter "Bilddaten" werden hier alle Daten verstanden, die sich zur bildlichen Wiedergabe durch die Anzeigevorrichtung eignen, also zum Beispiel digitale Fotos, insbesondere Gesichtsbilder, textuelle Angaben, ein- oder zweidimensionale Barcodes oder dergleichen. Die elektronische Schaltung ist hier so ausgebildet, dass sie auf die Bilddaten zugreifen kann, um die Anzeigevorrichtung zur Wiedergabe dieser Bilddaten anzusteuern, nachdem der Übergang von dem Erstbenutzungsstatus in den Benutzt-Status erfolgt ist.

Beispielsweise wird in dem Erstbenutzungsstatus lediglich der Aktivierungscode auf der Anzeigevorrichtung des Dokuments angezeigt. Nachdem der Übergang von dem Erstbenutzungsstatus in den Benutzt-Status vollzogen worden ist, werden hingegen die Bilddaten auf der Anzeigevorrichtung angezeigt, wie zum Beispiel ein Gesichtsbild eines Trägers des Dokuments. Wenn die Anzeigevorrichtung bistabile Anzeigeelemente aufweist, so werden in dem Benutzt-Status die Bilddaten anstelle des Aktivierungscodes permanent angezeigt. Dies ist besonders für eine Sichtprüfung des Dokuments vorteilhaft, wenn kein Lesegerät zur Verfügung steht.

In einem weiteren Aspekt betrifft die Erfindung ein Verfahren zur Wahl einer geheimen Kennung, wie zum Beispiel einer sogenannten PIN, zum Freischalten einer Funktion der elektronischen Schaltung des Dokuments oder der Schaltung insgesamt. Bei der Funktion kann es sich zum Beispiel um eine sogenannte Chipkarten-Funktion handeln. Nach Ausführungsformen der Erfindung erfolgt die Wahl der geheimen Kennung mit den folgenden Schritten: Anzeige eines Aktivierungscodes auf einer Anzeigevorrichtung des Dokuments; Eingabe eines Codes durch einen Benutzer; Überprüfung, ob der eingegebene Code mit dem Aktivierungscode übereinstimmt; bei Übereinstimmung des Codes mit dem Aktivierungscode, Eingabe der geheimen Kennung, insbesondere einer PIN, durch den Benutzer und Übergang von einem Erstbenutzungsstatus der Schaltung in einen Benutzt-Status.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemä- ßen Dokuments,
- Figur 2: ein Flussdiagramm einer Ausführungsform eines erfindungsgemä- ßen Verfahrens,
- Figur 3: ein Flussdiagramm einer weiteren Ausführungsform eines erfin- dungsgemäßen Verfahrens.

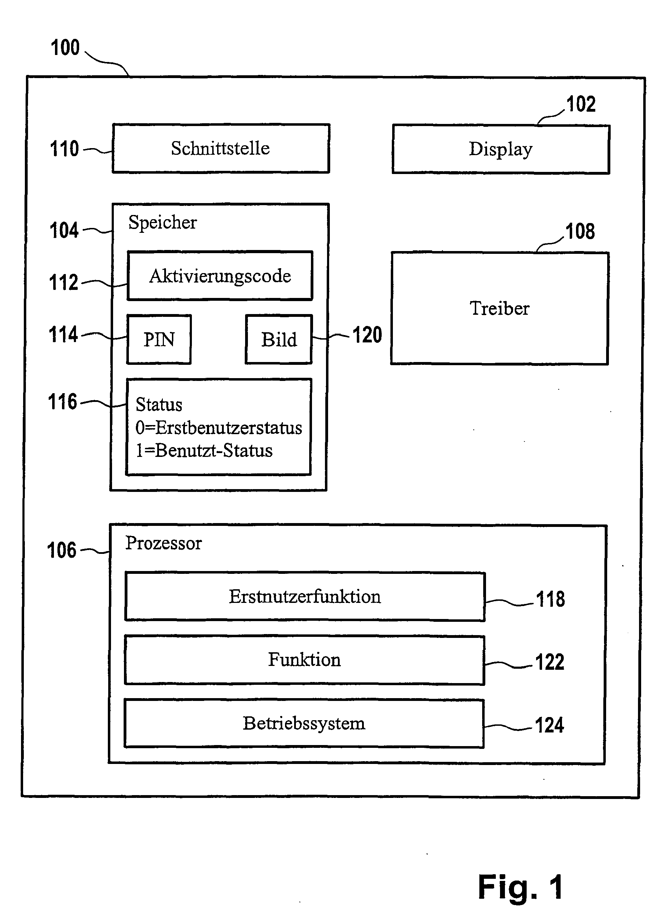

Die Figur 1 zeigt ein Dokument 100. Das Dokument 100 kann papierbasiert und/oder kunststoffbasiert ausgebildet sein. Insbesondere kann das Dokument 100 buchartig oder kartenförmig ausgebildet sein. Insbesondere kann es sich bei dem Dokument 100 um eine Chipkarte handeln.

Das Dokument 100 hat eine in den Dokumentenkörper integrierte Anzeige 102, einen elektronischen Speicher 104, einen Prozessor 106 sowie eine Treiberschaltung 108 für die Anzeige 102.

Ferner kann das Dokument 100 eine Schnittstelle 110 zur Kommunikation mit einem externen Lesegerät aufweisen. Alternativ oder zusätzlich dient die Schnittstelle 110 zur Versorgung des Dokuments 100 mit elektrischer Energie. Das Dokument 100 kann aber auch eine integrierte Energieversorgung, wie zum Beispiel eine Batterie aufweisen.

Die Anzeige 102, der elektronische Speicher 104, der Prozessor 106, die Treiberschaltung 108 und/oder die Schnittstelle 110 können als eine integrierte elektronische Schaltung oder als separate diskrete Bauelemente ausgeführt sein.

Die Schnittstelle 110 kann kontaktbehaftet oder kontaktlos, insbesondere als RFID-Schnittstelle ausgebildet sein. Ferner kann die Schnittstelle auch als so genanntes Dual Mode Interface ausgebildet sind. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Der elektronische Speicher 104 dient zur Speicherung eines Aktivierungscodes 112 sowie einer geheimen Kennung 114, beispielsweise einer sogenannten PIN. Der elektronische Speicher 104 hat ferner ein Status-Register 116, welches den aktuellen Status einer Erstnutzerfunktion 118 angibt. Die Erstnutzerfunktion 118 kann in der hier betrachteten Ausführungsform zwei Zustände aufweisen: Den Erstbenutzungsstatus, das heißt Status = Null, der angibt, dass eine Kennung 114 noch nicht von dem autorisierten Benutzer vergeben worden ist, oder einen Benutzt-Status, das heißt Status = Eins, der angibt, dass eine gültige Kennung 114 von dem autorisierten Benutzer gewählt und in dem Speicher 104 gespeichert worden ist. Aufgrund des in dem Status-Register 116 gespeicherten Status der Erstnutzerfunktion 118 kann sich ein autorisierter Benutzer also dahingehend versichern, dass nicht bereits zuvor von einem Dritten, nicht autorisierten Benutzer eine Kennung vorgegeben worden ist.

Der Speicher 104 kann ferner zur Speicherung von Personalisierungsinformationen dienen. Hierbei kann es sich um Informationen betreffend das Dokument 100 handeln, dass heißt beispielsweise eine Dokumentennummer, eine Gültigkeitsdauer, ein Ausstellungsdatum, die ausstellende Behörde oder dergleichen. Alternativ oder zusätzlich können die Personalisierungsinformationen personenbezogene Angaben beinhalten, insbesondere zu dem Träger des Dokuments 100.

Nach einer Ausführungsform der Erfindung sind in dem Speicher 104 Bilddaten 120 gespeichert, wie zum Beispiel ein oder mehrere Gesichtsbilder des Trägers des Dokuments 100.

Der Prozessor 106 dient zur Ausführung ein oder mehrerer Funktionen, wie zum Beispiel der Funktion 122. Bei der Funktion 122 kann es sich zum Beispiel um eine Funktion zur Generierung einer digitalen Signatur oder eine sonstige Ver- oder Entschlüsselungsfunktion, eine Bezahlfunktion, eine Authentisierungsfunktion oder dergleichen handeln.

Insbesondere kann es sich bei der Funktion 122 um eine Chipkartenfunktion handeln, wenn das Dokument 100 als Chipkarte ausgebildet ist.

Der Prozessor 106 dient ferner zur Ausführung eines Betriebssystems 124. Die Erstnutzerfunktion 118 kann einen integralen Bestandteil des Betriebssystems 124 bilden.

Die Kennung 114 kann der Funktion 122 zugeordnet sein, dass heißt zur Freischaltung der Funktion 122 ist die korrekte Eingabe der Kennung 114 erforderlich. Alternativ kann die Kennung 114 auch zum Schutz mehrerer oder sämtlicher der Funktionen dienen, so dass also zur Nutzung jeder der Funktionen die vorherige korrekte Eingabe der Kennung 114 erforderlich ist.

In einer ersten Ausführungsform kann so vorgegangen werden, dass anlässlich der Personalisierung des Dokuments 100 der Aktivierungscode 112 festgelegt wird und durch ein Personalisierungsgerät in dem Speicher 104 gespeichert wird. Ferner werden auch die Bilddaten 120 in dem Speicher 104 gespeichert. Die Kennung 114 wird dagegen nicht festgelegt. Das Status-Register 116 wird auf Status = Null gesetzt. In diesem Zustand wird das Dokument 100 an einen Benutzer ausgehändigt. Der Benutzer führt das Dokument in ein Lesegerät ein, wie zum Beispiel ein übliches Chipkarten-Lesegerät, so dass das Dokument 100 über die Schnittstelle 110 mit elektrischer Energie versorgt wird. Daraufhin startet das Betriebssystem 124 und prüft den gegenwärtigen Status der Erstnutzerfunktion 118 durch Abfrage des Status-Registers 116. Da der Status = Null ist, greift das Betriebssystem 124 auf den Aktivierungscode 112 zu. Ferner steuert das Betriebssystem 124 die Treiberschaltung 108 zur Wiedergabe des Aktivierungscodes 112 auf der Anzeige 102 an, so dass der Benutzer den Aktivierungscode 112 von der Anzeige 102 ablesen kann.

Um das Dokument 100 in Benutzung zu nehmen, gibt der Benutzer den von der Anzeige 102 abgelesenen Aktivierungscode über das Lesegerät in das Dokument 100 ein. Das Betriebssystem 124 vergleicht daraufhin den eingegebenen Aktivierungscode mit dem in dem Speicher 104 gespeicherten Aktivierungscode 112. Wenn die beiden Aktivierungscodes übereinstimmen, so sendet das Betriebssystem 124 eine Aufforderung an das Lesegerät zur Eingabe einer von dem Benutzer zu wählenden Kennung 114. Der Benutzer kann daraufhin eine zum Beispiel sechsstellige PIN als Kennung 114 eingeben, die von dem Betriebssystem 124 dann in dem Speicher 104 gespeichert wird. Nach der Speicherung der Kennung 114 in dem Speicher 104 geht die Erstnutzerfunktion 118 von dem Status = Null auf den Status = Eins irreversibel über. Vor diesem Statusübergang kann der Benutzer zur nochmaligen Eingabe der Kennung 114 aufgefordert werden, um sicherzustellen, dass die erste Eingabe der Kennung 114 korrekt war.

Nach der initialen Vergabe der Kennung 114 kann die Funktion 122 freigeschaltet sein. Für jede weitere Nutzung der Funktion 122 kann die erneute Eingabe der Kennung 114 erforderlich sein.

In einer zweiten Ausführungsform wird der Aktivierungscode 112 nicht anlässlich der Personalisierung des Dokuments 100 festgelegt. Im Gegenteil wird das Dokument 100 an den Benutzer ausgehändigt, ohne dass der Aktivierungscode 112 bereits festliegt. In dieser Ausführungsform ist das Betriebssystem 124 zur Festlegung des Aktivierungscodes 112 ausgebildet. Dies kann so erfolgen, dass das Betriebssystem 124 auf in dem Speicher 104 gespeicherte Personalisierungsinformationen zugreift, um daraus nach einem vorgegebenen Algorithmus einen Aktivierungscode 112 zu gewinnen. Beispielsweise kann der Aktivierungscode 112 aus Teilen der in dem Speicher 104 gespeicherten Dokumentennummer, der Gültigkeitsdauer und/oder persönlichen Angaben zu dem Träger des Dokuments 100 zusammengesetzt werden. Alternativ oder zusätzlich kann das Betriebssystem 124 einen Zufallswert generieren, der als Aktivierungscode 112 definiert wird, oder der in die Generierung des Aktivierungscodes 112 eingehen kann. Nachdem der Aktivierungscode 112 generiert und in dem Speicher 104 abgespeichert worden ist, steuert das Betriebssystem 124 wiederum die Treiberschaltung 108 an, so dass der Aktivierungscode 112 auf der Anzeige 102 angezeigt wird.

In einer dritten Ausführungsform beinhaltet die Anzeige 102 bistabile Anzeigeelemente. Anlässlich der Personalisierung des Dokuments 100 wird der Aktivierungscode 112 festgelegt und durch ein Personalisierungsgerät in dem Speicher 104 gespeichert. Ferner wird die Anzeige 102 zum Beispiel von dem Personalisierungsgerät oder durch das Betriebssystem 124 angesteuert, um den Aktivierungscode 112 mit Hilfe der bistabilen Anzeigeelemente anzuzeigen. Nach der Personalisierung zeigt also die Anzeige 102 permanent den Aktivierungscode 112 an, auch wenn keine elektrische Energieversorgung für das Dokument 100 zur Verfügung steht. In diesem Erstbenutzerstatus wird das Dokument 100 an den Benutzer ausgehändigt. Der Benutzer erkennt auf einen Blick an der Tatsache, dass der Aktivierungscode 112 auf der Anzeige 102 angezeigt wird, dass sich das Dokument 100 in dem Erstbenutzerstatus befinden muss. Der Benutzer führt das Dokument 100 in ein Lesegerät ein und gibt den Aktivierungscode 112 ein. Nach Prüfung des eingegeben Aktivierungscodes auf Übereinstimmung mit dem Aktivierungscode 112 durch das Betriebssystem 124 und nach Eingabe der PIN 114 durch den Benutzer steuert das Betriebssystem 124 die Treiberschaltung 108 an, um statt des Aktivierungscodes 112 die Bilddaten 120 auf der Anzeige 102 wiederzugeben. Hierdurch ist es für den Benutzer augenfällig, dass der Übergang von dem Erstbenutzerstatus in den Benutzt-Status vollzogen wurde. Von besonderem Vorteil ist hier weiterhin, dass eine Sichtprüfung des Dokuments 100 auch dann möglich ist, wenn kein Lesegerät zur Verfügung steht, da ja die Bilddaten 120 auf der Anzeige 102 mit Hilfe der bistabilen Anzeigeelemente permanent wiedergegeben werden.

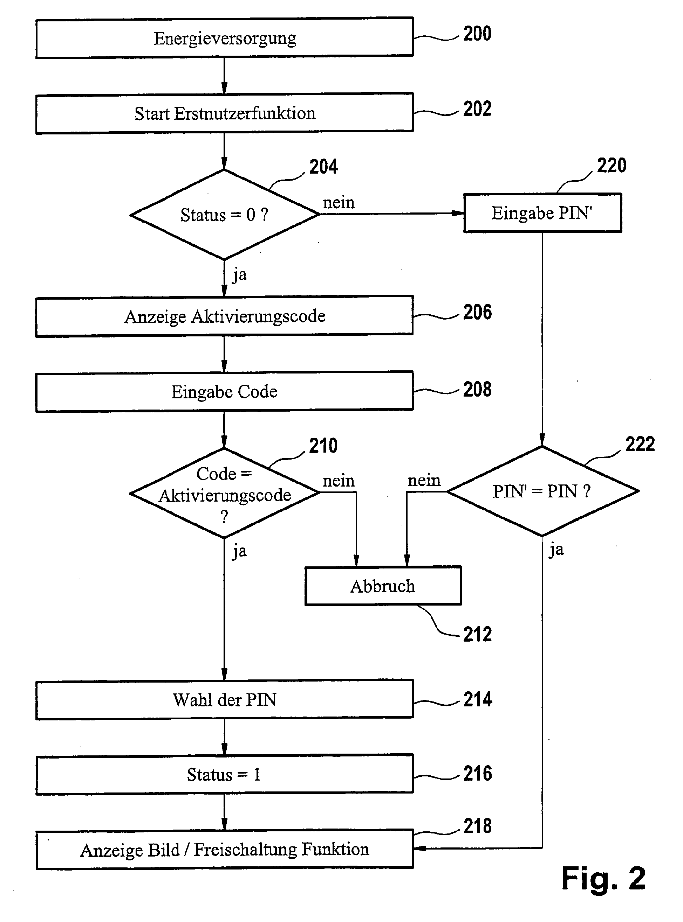

Die Figur 2 zeigt ein entsprechendes Flussdiagramm. In dem Schritt 200 wird eine Energieversorgung für das Dokument 100 (vgl. Figur 1) zur Verfügung gestellt. Dies kann dadurch erfolgen, dass das Dokument 100 in ein Lesegerät eingeführt wird oder in das elektromagnetische Feld, insbesondere ein RF-Feld, eines Lesegeräts eingebracht wird. Aufgrund der Versorgung des Dokuments mit elektrischer Energie startet dessen Erstnutzerfunktion in dem Schritt 202. Daraufhin wird in dem Schritt 204 geprüft, ob sich das Dokument 100 in dem Erstbenutzerstatus befindet, dass heißt Status = Null? Wenn dies der Fall ist, wird in dem Schritt 206 der Aktivierungscode auf der Anzeige des Dokuments angezeigt.

Der Benutzer kann den Aktivierungscode also von der Anzeige des Dokuments ablesen und in dem Schritt 208 einen entsprechenden Code in das Lesegerät eingeben. Der Code wird von dem Lesegerät zu dem Dokument übertragen. In dem Schritt 210 prüft das Dokument, ob der eingegebene Code mit dem Aktivierungscode identisch ist. Wenn dies nicht der Fall ist, erfolgt in dem Schritt 212 ein Abbruch. Wenn hingegen der Aktivierungscode korrekt eingegeben wurde, so wird der Benutzer in dem Schritt 214 dazu aufgefordert, eine Kennung, das heißt, eine sogenannte PIN, zu vergeben und in das Lesegerät einzugeben. Die Kennung wird von dem Lesegerät zu dem Dokument übertragen und in dem Dokument gespeichert. Ferner wird in dem Schritt 216 der Status auf "Eins" gesetzt, dass heißt, das Dokument geht in den Benutzt-Status über. Daraufhin kann in dem Schritt 218 eine Anzeige eines Bildes auf der Anzeige des Dokuments erfolgen und/oder eine Funktion, insbesondere eine Chipkartenfunktion, wird freigeschaltet.

Wenn sich in dem Schritt 204 ergibt, dass der Status nicht gleich "Null" ist, so wird der Benutzer in dem Schritt 220 zur Eingabe der Kennung aufgefordert. Der Benutzer gibt also eine Kennung PIN' in das Lesegerät ein, welches die PIN' zu dem Dokument überträgt. Das Dokument prüft dann, ob die PIN' gleich der in dem Speicher des Dokuments gespeicherten PIN ist. Wenn dies nicht der Fall ist, erfolgt in dem Schritt 212 ein Abbruch. Im gegenteiligen Fall wird in dem Schritt 218 das Bild angezeigt und/oder eine Funktion des Dokuments freigeschaltet.

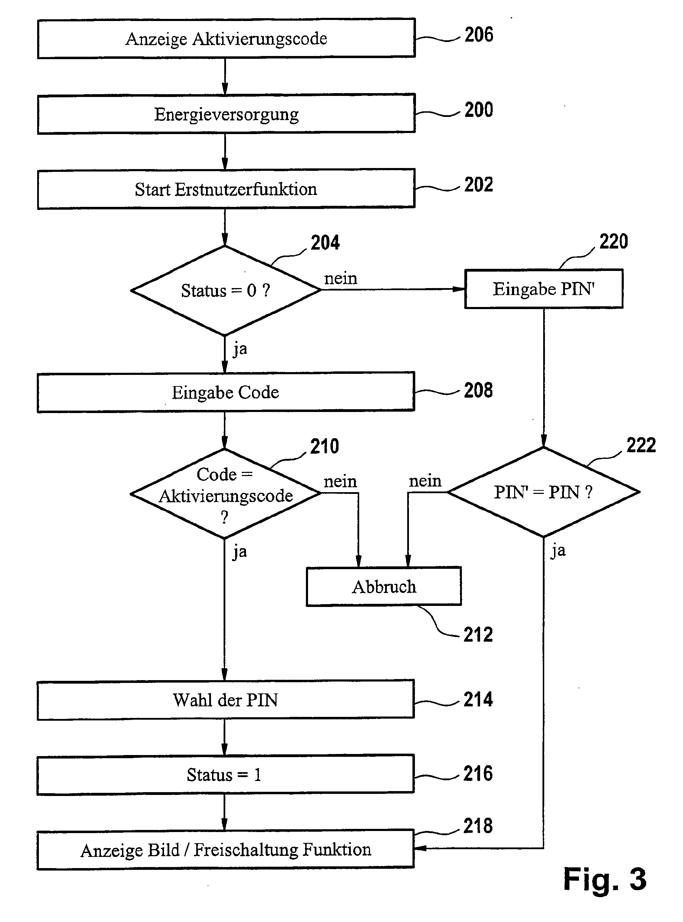

Die Figur 3 zeigt eine alternative Ausführungsform des Verfahrens der Figur 2. Bei dieser Ausführungsform wird ein Dokument mit einer Anzeige verwendet, die bistabile Anzeigeelemente aufweist. Anlässlich der Personalisierung des Dokuments wird die Anzeige zur Anzeige des Aktivierungscodes angesteuert. Das Dokument verbleibt dann in diesem Zustand und zeigt permanent den Aktivierungscode auf der Anzeige an, solange sich das Dokument in dem Erstbenutzerstatus befindet. In der Ausführungsform der Figur 3 wird also bereits bei Aushändigung des Dokuments an den Benutzer der Aktivierungscode angezeigt und nicht erst nach der Statusprüfung in dem Schritt 204, wie das in der Ausführungsform der Figur 2 der Fall ist. Ansonsten können die Ausführungsformen der Figuren 2 und 3 identisch sein.

### Bezugszeichenliste

- 100: Dokument
- 102: Anzeige
- 104: elektronischer Speicher
- 106: Prozessor
- 108: Treiberschaltung
- 110: Schnittstelle
- 112: Aktivierungscode
- 114: Kennung
- 116: Status-Register
- 118: Erstnutzerfunktion
- 120: Bilddaten
- 122: Funktion
- 124: Betriebssystem

## Patentansprüche

1. Dokument beinhaltend eine Anzeigevorrichtung (102) und eine elektronische Schaltung (104, 106, 108), wobei sich die Schaltung in einem Erstbenutzungsstatus oder in einem Benutzt-Status befinden kann, wobei die Anzeigevorrichtung zur Anzeige eines Aktivierungscodes (112) ausgebildet ist, und wobei die Schaltung so ausgebildet ist, dass aufgrund einer korrekten Eingabe des Aktivierungscodes und der Wahl einer geheimen Kennung (114) durch einen Benutzer ein Übergang von dem Erstbenutzungsstatus in den Benutzt-Status erfolgt.

2. Dokument nach Anspruch 1, wobei die Schaltung zur Ansteuerung der Anzeigevorrichtung zur Anzeige des Aktivierungscodes ausgebildet ist.

3. Dokument nach Anspruch 1 oder 2, mit einem elektronischen Speicher (104) zur Speicherung des Aktivierungscodes.

4. Dokument nach Anspruch 1, 2 oder 3, wobei die Schaltung zur Generierung des Aktivierungscodes ausgebildet ist.

5. Dokument nach Anspruch 4, mit einem elektronischen Speicher zur Speicherung (104) von Personalisierungsdaten, wobei die Schaltung zur Generierung des Aktivierungscodes mit Hilfe der Personalisierungsdaten ausgebildet ist.

6. Dokument nach Anspruch 4 oder 5, mit einem Zufallsgenerator zur Generierung des Aktivierungscodes.

7. Dokument nach einem der vorhergehenden Ansprüche, wobei die Anzeigevorrichtung bistabile Anzeigeelemente zur Anzeige des Aktivierungscodes aufweist.

8. Dokument nach einem der vorhergehenden Ansprüche, mit einem elektronischen Speicher zur Speicherung eines Bildes (120), wobei die Schaltung zur Ansteuerung der Anzeigevorrichtung für eine Wiedergabe des Bildes ausgebildet ist, wenn sich die Schaltung in dem Benutzt-Zustand befindet.

9. Dokument nach Anspruch 8, wobei es sich beim dem Bild um ein Gesichtbild des Trägers der Dokuments handelt.

10. Dokument nach einem der vorhergehenden Ansprüche, wobei es sich beim Dokument um eine Chipkarte handelt.

11. Verfahren zur Wahl einer geheimen Kennung zum Freischalten einer elektronischen Schaltung eines Dokuments mit folgenden Schritten:
- Anzeige eines Aktivierungscodes (112) auf einer Anzeigevorrichtung (102) des Dokuments (100),
- Eingabe eines Codes durch einen Benutzer,
- Überprüfung, ob der eingegebene Code mit dem Aktivierungscode übereinstimmt,
- bei Übereinstimmung des Codes mit dem Aktivierungscode, Eingabe der geheimen Kennung (114) durch den Benutzer, Speicherung der geheimen Kennung in einem Speicher (104) des Dokuments, und Übergang von einem Erstbenutzungsstatus der Schaltung in einen Benutzt-Status.

12. Verfahren nach Anspruch 11, wobei der Aktivierungscode permanent auf der Anzeigevorrichtung angezeigt wird, wenn sich die Schaltung in dem Erstbenutzungsstatus befindet.

13. Verfahren nach Anspruch 11 oder 12, wobei das Dokument einen elektronischen Speicher zur Speicherung von Personalisierungsdaten aufweist, und wobei die Personalisierungsdaten auf der Anzeigevorrichtung nur dann angezeigt werden, wenn sich die Schaltung in dem Benutzt-Status befindet.

14. Verfahren nach Anspruch 11, 12 oder 13, wobei das Dokument einen elektronischen Speicher (104) zur Speicherung von Bilddaten (120) aufweist, und wobei die Bilddaten von der Anzeigevorrichtung wiedergegeben werden, wenn sich die Schaltung in dem Benutzt-Status befindet.

## Claims

1. Document containing a display apparatus (102) and an electronic circuit (104, 106, 108), wherein the circuit may be in a first-use status or in a used status, wherein the display apparatus is designed to display an activation code (112), and wherein the circuit is designed such that correct input of the activation code and the selection of a secret identifier (114) by a user are taken as a basis for changing from the first-use status to the used status.

2. Document according to Claim 1, wherein the circuit is designed to actuate the display apparatus to display the activation code.

3. Document according to Claim 1 or 2, having an electronic memory (104) for storing the activation code.

4. Document according to Claim 1, 2 or 3, wherein the circuit is designed to generate the activation code.

5. Document according to Claim 4, having an electronic memory for storing (104) personalization data, wherein the circuit is designed to generate the activation code using the personalization data.

6. Document according to Claim 4 or 5, having a random number generator for generating the activation code.

7. Document according to one of the preceding claims, wherein the display apparatus has bistable display elements for displaying the activation code.

8. Document according to one of the preceding claims, having an electronic memory for storing an image (120), wherein the circuit is designed to actuate the display apparatus to reproduce the image when the circuit is in the used state.

9. Document according to Claim 8, wherein the image is a facial image of the bearer of the document.

10. Document according to one of the preceding claims, wherein the document is a chip card.

11. Method for selecting a secret identifier for enabling an electronic circuit in a document, having the following steps:
- an activation code (112) is displayed on a display apparatus (102) in the document (100),
- a code is input by a user,
- a check is performed to determine whether the input code matches the activation code,
- if the code matches the activation code, the secret identifier (114) is input by the user, the secret identifier is stored in a memory (104) in the document, and a first-use status of the circuit is changed to a used status.

12. Method according to Claim 11, wherein the activation code is displayed permanently on the display apparatus when the circuit is in the first-use status.

13. Method according to Claim 11 or 12, wherein the document has an electronic memory for storing personalization data, and wherein the personalization data are displayed on the display apparatus only when the circuit is in the used status.

14. Method according to Claim 11, 12 or 13, wherein the document has an electronic memory (104) for storing image data (120), and wherein the image data are reproduced by the display apparatus when the circuit is in the used status.

## Revendications

1. Document comprenant un dispositif d'affichage (102) et un circuit électronique (104, 106, 108), le circuit pouvant se trouver dans un état de première utilisation ou dans un état utilisé, le dispositif d'affichage étant configuré pour afficher un code d'activation (112) et le circuit étant configuré de telle sorte qu'une transition de l'état de première utilisation à l'état utilisé a lieu sur la base d'une saisie correcte du code d'activation et de la sélection d'un identifiant secret (114) par un utilisateur.

2. Document selon la revendication 1, le circuit étant configuré pour commander le dispositif d'affichage en vue d'afficher le code d'activation.

3. Document selon la revendication 1 ou 2, comprenant une mémoire électronique (104) pour mémoriser le code d'activation.

4. Document selon la revendication 1, 2 ou 3, le circuit étant configuré pour générer le code d'activation.

5. Document selon la revendication 4, comprenant une mémoire électronique pour mémoriser (104) des données de personnalisation, le circuit étant configuré pour générer le code d'activation à l'aide des données de personnalisation.

6. Document selon la revendication 4 ou 5, comprenant un générateur aléatoire pour générer le code d'activation.

7. Document selon l'une des revendications précédentes, le dispositif d'affichage présentant des éléments d'affichage bistables pour afficher le code d'activation.

8. Document selon l'une des revendications précédentes, comprenant une mémoire électronique pour mémoriser une image (120), le circuit étant configuré pour commander le dispositif d'affichage pour une reproduction de l'image lorsque le circuit se trouve dans l'état utilisé.

9. Document selon la revendication 8, l'image étant une photo du visage du porteur du document.

10. Document selon l'une des revendications précédentes, le document étant une carte à puce.

11. Procédé de sélection d'un identifiant secret en vue de déverrouiller un circuit électronique d'un document comprenant les étapes suivantes :
- affichage d'un code d'activation (112) sur un dispositif d'affichage (102) du document (100),
- saisie d'un code par un utilisateur,
- vérification de la concordance entre le code saisi et le code d'activation,
- en cas de concordance du code avec le code d'activation, saisie de l'identifiant secret (114) par l'utilisateur, mémorisation de l'identifiant secret dans une mémoire (104) du document et transition d'un état de première utilisation du circuit à un état utilisé.

12. Procédé selon la revendication 11, selon lequel le code d'activation est affiché en permanence sur le dispositif d'affichage lorsque le circuit se trouve dans l'état de première utilisation.

13. Procédé selon la revendication 11 ou 12, selon lequel le document présente une mémoire électronique pour mémoriser des données de personnalisation et selon lequel les données de personnalisation ne sont affichées sur le dispositif d'affichage que lorsque le circuit se trouve dans l'état utilisé.

14. Procédé selon la revendication 11, 12 ou 13, selon lequel le document présente une mémoire électronique (104) pour mémoriser des données d'image (120) et selon lequel les données d'image sont reproduites par le dispositif d'affichage lorsque le circuit se trouve dans l'état utilisé.
